# EUROPÄISCHE PATENTSCHRIFT

(11) **EP 2 279 900 B1**
(45) Veröffentlichungstag und Bekanntmachung des Hinweises auf die Patenterteilung: **06.06.2012**
(21) Anmeldenummer: 09009900.3
(22) Anmeldetag: 30.07.2009
(51) Int. Cl.: B60N 2/22, B60N 2/44

(54) **Verstellbeschlag für Kraftfahrzeugsitze**
Adjustment fitting for motor vehicle seats
Armature réglable pour sièges de véhicule automobile

(43) Veröffentlichungstag der Anmeldung: 02.02.2011
(73) Patentinhaber: Rollax GmbH & Co. KG, 32107 Bad Salzuflen (DE)
(72) Erfinder: Milto, Benjamin, 33790 Halle (DE); Illert, Martin, 32547 Halle (DE)
(74) Vertreter: Wiebusch, Manfred

(56) Entgegenhaltungen:
- EP-A1- 0 631 901
- WO-A1-96/20352
- DE-A1-102006 046 495
- US-A- 3 517 965

## Beschreibung

Die Erfindung betrifft einen Verstellbeschlag für Kraftfahrzeugsitze, mit einer Kupplung, die mindestens einen längs einer Trajektorie bewegbaren Klemmkörper, eine parallel zu der Trajektorie verlaufende erste Laufbahn aus Metall mit einer gehärteten Oberflächenschicht und eine von der Trajektorie abweichende, eine Klemmkontur bildende zweite Laufbahn aufweist.

Aus EP 0 743 221 ist ein Verstellbeschlag für Kraftfahrzeugsitze bekannt, der beispielsweise zur Neigungsverstellung der Rückenlehne dienen kann. Dieser Verstellbeschlag enthält zwei Kupplungen, die jeweils ein erstes Element, ein zweites Element und ein Löseelement aufweisen. Die ersten und zweiten Elemente bilden ringförmige, konzentrisch zueinander angeordnete Laufbahnen. zwischen denen Klemmkörper angeordnet sind, die durch das Löseelement beaufschlagt werden. Die Laufbahn des ersten Elements ist zylindrisch. Die zweite Laufbahn, d. h. die Laufbahn des zweiten Elements, bildet eine Klemmkontur, an der die Klemmkörper klemmen, so daß die Kupplung sperrt und das zweite Element starr an dem ersten Element blockiert, wenn von außen ein Drehmoment auf das zweite Element wirkt. Wenn dagegen ein Drehmoment auf das Löseelement ausgeübt wird, so verschiebt dieses die Klemmkörper in eine nicht klemmende Position, so daß die Kupplung gelöst wird und das zweite Element durch einen Mitnehmer des Löseelements mitgenommen und relativ zu dem ersten Element verdreht werden kann. Dabei bewegen sich die Klemmkörper auf einer kreisförmigen Trajektorte, die durch die zylindrische erste Laufbahn vorgegeben wird.

Bei einer ersten der beiden Kupplungen ist das zweite Element mit einem Verstellhebel verbunden, mit dem es aus einer Neutralposition heraus in entgegengesetzte Richtungen verdreht werden kann, wobei die Kupplung sperrt und das erste Element in der jeweiligen Drehrichtung mitnimmt. Wenn man den Verstellhebel losläßt, wirkt auf das Löseelement eine Rückstellfeder, die das Lösen der Kupplung bewirkt, so daß das zweite Element und der Verstellhebel unter der Federkraft in die Neutralposition zurückkehren, sich dabei aber relativ zu dem ersten Element verdrehen können. Das erste Element dieser ersten Kupplung ist starr mit dem Löseelement der zweiten Kupplung verbunden, deren erstes Element feststeht und deren zweites Element die Neigungsverstellung der Rückenlehne bewirkt. Wenn der Verstellhebel aus der Neutralposition herausgeschwenkt wird, so wird folglich die Rückenlehne in der gewünschten Richtung verschwenkt. Wenn dagegen der Verstellhebel in die Neutralstellung zurückkehrt, sperrt die zweite Kupplung und bewirkt, daß die Rückenlehne an dem feststehenden ersten Element blockiert wird. Auf diese Weise läßt sich durch ein- oder mehrmaliges Pumpen mit dem Verstellhebel die Neigung der Rückenlehne auf jede gewünschte Position einstellen, und die Rückenlehne bleibt dann in der eingestellten Position, solange der Verstellhebel nicht erneut betätigt wird.

Die ersten und zweiten Elemente der Kupplungen können durchgehärtet sein oder nur an den Laufbahnen oberflächengehärtet sein. Wenn die Laufbahnen nur oberflächengehärtet ist, können sie nur einem bestimmten Druck des Klemmkörpers standhalten. Die Härte und Tiefe ist bei beiden Oberflächenschichten gleich und wird so gewählt, daß die Oberflächenschichten nicht durch die Klemmkörper eingedrückt werden.

Aus Sicherheitsgründen wird verlangt, daß die Kupplung die Rücklehne auch dann zuverlässig in ihrer eingestellten Position hält, wenn bei einem Unfall des Kraftfahrzeugs sehr hohe Trägheitskräfte auf die Rückenlehne wirken und die Kupplung einem entsprechend hohen Drehmoment ausgesetzt ist. Bei herkömmlichen Verstellbeschlägen für Kraftfahrzeugsitze liegt das Drehmoment, dem die Kupplung standhalten kann, typischerweise in der Größenordnung von 120 bis 140 Nm.

Aufgabe der Erfindung ist es, einen Verstellbeschlag zu schaffen, dessen Kupplung bei gegebenem konstruktivem Aufbau einem höheren Drehmoment standhält.

Diese Aufgabe wird erfindungsgemäß dadurch gelöst, daß die Oberflächenschicht der ersten Laufbahn nach Härte und Tiefe so dimensioniert ist, daß die erste Laufbahn weicher ist als die zweite.

Bei den Belastungen, die bei normalem Betrieb des Kraftfahrzeugs auftreten, bleibt die Oberflächenschicht der Laufbahn intakt, und es tritt keine plastische Verformung ein, so daß die Funktion des Verstellbeschlages dauerhaft gewährleistet bleibt. Wenn dagegen bei einem Crash ein höheres Drehmoment auftritt, übersteigt der von dem Klemmkörper auf die erste Laufbahn ausgeübte Druck den kritischen Wert, und die Laufbahn sowie das darunterliegende weichere Kernmaterial des betreffenden Kupplungselements geben nach, so daß sich der Klemmkörper in die Laufbahn eingräbt, bevor andere plastische oder elastische Verformungen an den Bauteilen der Kupplung auftreten. Dieses Eingraben des Klemmkörpers hat zur Folge, daß die Haltekraft der gesperrten Kupplung nicht abnimmt, sondern im Gegenteil deutlich zunimmt, da der Klemmkörper jetzt formschlüssig an der ersten Laufbahn gehalten wird, so daß die Kupplung auch bei deutlich höheren Drehmomenten, beispielsweise bei 200 Nm oder mehr, ihre Sperrfunktion behält.

In der Regel wird es erforderlich sein, die Kupplung auszutauschen, nachdem eine plastische Verformung an der ersten Laufbahn eingetreten ist. Da das jedoch bei normalem Betrieb des Kraftfahrzeugs nicht vorkommt, sondern nur im Crashfall, kann diese Konsequenz in der Praxis hingenommen werden.

Durch die Erfindung kann so bei einem verhältnismäßig kleinbauendem Verstellbeschlag eine wesentlich höhere Crashsicherheit erreicht werden.

Im Einzelfall wird die Dimensionierung der Härte und der Tiefe der gehärteten Oberflächenschicht von den praktischen Anforderungen abhängen. Je härter und dicker die Oberflächenschicht ist, desto höher ist das Grenzdrehmoment, bei es dem zu einer plastischen Verformung kommt. Die Drehmomentbelastung, der die Kupplung ausgesetzt ist, hängt nicht nur von der Größe der auf die Rückenlehne (im Fall eines Sitzlehnenverstellers) ausgeübten Kräfte ab, sondern auch von der Konstruktion des Verstellbeschlages als Ganzes. Wenn der Verstellbeschlag beispielsweise ein Untersetzungsgetriebe enthält, so kann das auf die Kupplung wirkende Drehmoment von dem auf die Rückenlehne wirkenden Drehmoment deutlich verschieben sein. Die Oberflächenschicht wird jeweils so dimensioniert, daß es bei den normalen Belastungen bei normalem Betrieb des Kraftfahrzeugs noch nicht zu einem Nachgeben der Oberflächenschicht kommt, aber die Laufbahn nachgibt, sobald bei einem Crash ein höheres Drehmoment auftritt.

Im folgenden wird ein Ausführungsbeispiel der Erfindung anhand der Zeichnung näher erläutert.

Es zeigen:
- Fig. 1: eine schematische Darstellung eines Kraftfahrzeugsitzes mit ei- nem Verstellbeschlag;
- Fig. 2: einen Schnitt durch eine Kupplung in dem Verstellbeschlag;
- Fig. 3: eine Detaildarstellung der Kupplung nach Fig. 2 im gesperrten Zustand bei normaler Belastung;
- Fig. 4: eine Detaildarstellung der Kupplung im gesperrten Zustand bei einer Belastung, wie sie bei einem Crash des Kraftfahrzeugs auftreten kann; und
- Fig. 5: eine perspektivische Ansicht einer Kupplung gemäß einem an- deren Ausführungsbeispiel.

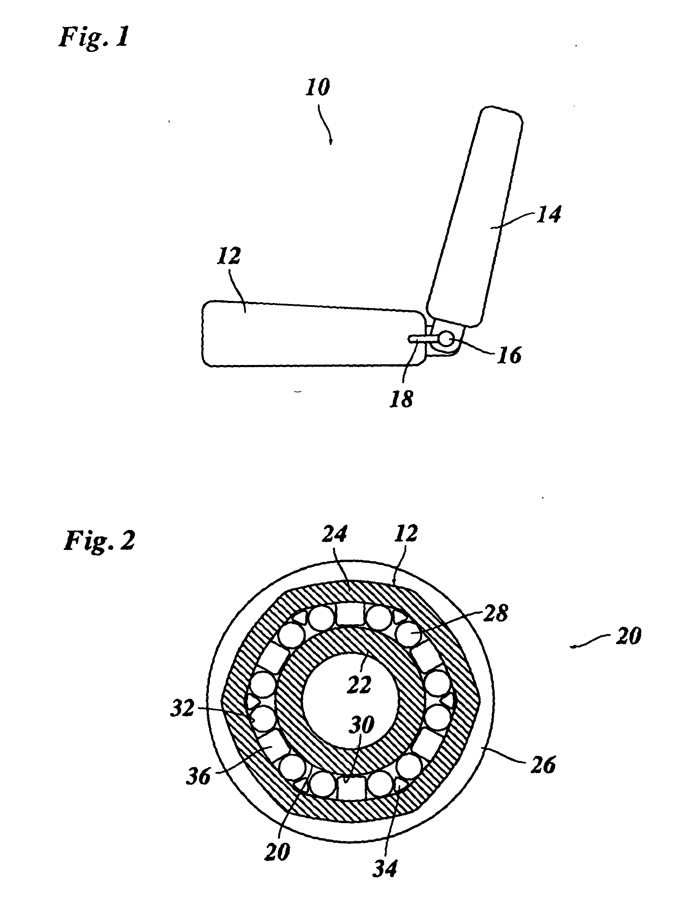

Fig. 1 zeigt einen Kraftfahrzeugsitz 10 mit einem Sitzkissen 12, einer Rückenlehne 14 und einem Verstellbeschlag 16, der einen an sich bekannten Aufbau aufweist und es erlaubt, die Neigung der Rückenlehne 14 nach Wunsch zu verstellen und die Rückenlehne dann in der jeweils eingestellten Position zu halten. Im gezeigten Beispiel weist der Verstellbeschlag 16 einen Verstellhebel 18 auf, den der Benutzer von Hand betätigen kann, um die Neigung der Rükkenlehne 14 zu verstellen.

Der Verstellbeschlag 16 enthält eine Kupplung 20, die in Fig, 2 im Querschnitt gezeigt ist. Diese Kupplung, die auch als Freilaufbremse bezeichnet wird, dient dazu, die Rückenlehne 14 in der jeweils eingestellten Position relativ zum Sitzkissen 12 zu halten. Wie Fig. 2 zeigt, umfaßt diese Kupplung einen Innenring 22, der hier ein feststehendes Element bildet und starr mit dem Sitzkissen 12 verbunden ist, einen Außenring 24, der ein mit der Rükkenlehne 14 verbundenes Ausgangselement bildet, und ein Löseelement 26, das durch Betätigen des Verstellhebels 18, ggf. über eine weitere nicht gezeigte Kupplung, wahlweise im Uhrzeigersinn oder im Gegenuhrzeigersinn gedreht werden kann, um die Neigung der Rückenlehne 14 zu verstellen. In dem ringförmigen Spalt zwischen dem Innenring 22 und dem Außenring 24 sind mehrere Paare von Klemmkörpern 28 angeordnet, die beispielsweise die Form von Walzen haben. Der Innenring 22 bildet an seinem äußeren Umfang eine zylindrische erste Laufbahn 30, an der sich die Klemmkörper 28 entlang bewegen können. Der Außenring 24 bildet an seiner inneren Umfangsfläche eine zweite Laufbahn 32 für die Klemmkörper. Diese Laufbahn 32 ist jedoch nicht zylindrisch, sondern bildet eine Klemmkontur, die im gezeigten Beispiel die Form eines leicht verrundeten Sechsecks hat, mit der Folge, daß die Breite des Spaltes zwischen den Laufbahnen 30 und 32 in Umfangsrichtung geringfügig variiert. An den Stellen, an denen der Spalt die maximale Breite hat, ist in dem Spalt jeweils ein elastischer Distanzkörper 34 angeordnet, der zwei ein Paar bildende Klemmkörper 28 zueinander auf Distanz hält. Das Löseelement 26 weist sechs Klauen 36 auf, die axial in den Spalt zwischen Innenring und Außenring hineinragen und jeweils zwischen zwei Paaren der Klemmkörper 28 liegen.

Wenn auf die Rückenlehne 14 eine Kraft ausgeübt wird, die die Tendenz hat, den Außenring 24 relativ zum Innenring 22 in der einen oder anderen Richtung zu verdrehen, so verengt sich für einen der beiden Klemmkörper 28 jedes Paares der Spalt zwischen den Laufbahnen 30, 32, und diese Klemmkörper, die sich an der ersten Laufbahn 30 abstützen, üben eine Klemmkraft auf die zweite Laufbahn 32 aus, so daß der Außenring 24 selbsthemmend am Innenring 22 blockiert wird. Die Kupplung ist dann gesperrt, und die Rückenlehne 14 wird in der eingestellten Position gehalten

Wenn dagegen das Löseelement 26 in der einen oder anderen Richtung gedreht wird, so verschieben die Klauen 36 je nach Drehrichtung einen der ihnen benachbarten Klemmkörper 28 in Umfangsrichtung, und zwar in der Richtung, in der die Breite des Spaltes größer wird. Diese Bewegung der Klemmkörper wird dadurch ermöglicht, daß die Distanzkörper 34 elastisch komprimierbar sind. Wenn auf diese Weise das Löseelement 26 um einen kleinen Winkel gedreht wurde, so nimmt ein nicht gezeigter Mitnehmer des Löseelements 26 den Außenring 24 mit, so daß auch der Außenring 24 und damit die Rückenlehne der Drehung des Löseelements 26 folgt. Die Klauen 36 verhindern dabei, daß es zu einer Klemmung und zu einem Blockieren kommt. Die Klemmkörper 28 bewegen sich dann auf einer kreisförmigen Trajektorie parallel zu der zylindrischen ersten Laufbahn 30. Wenn keine äußere Kraft mehr auf das Löseelement 26 wirkt, so bleibt die Rückenlehne in der neu erreichten Position fixiert.

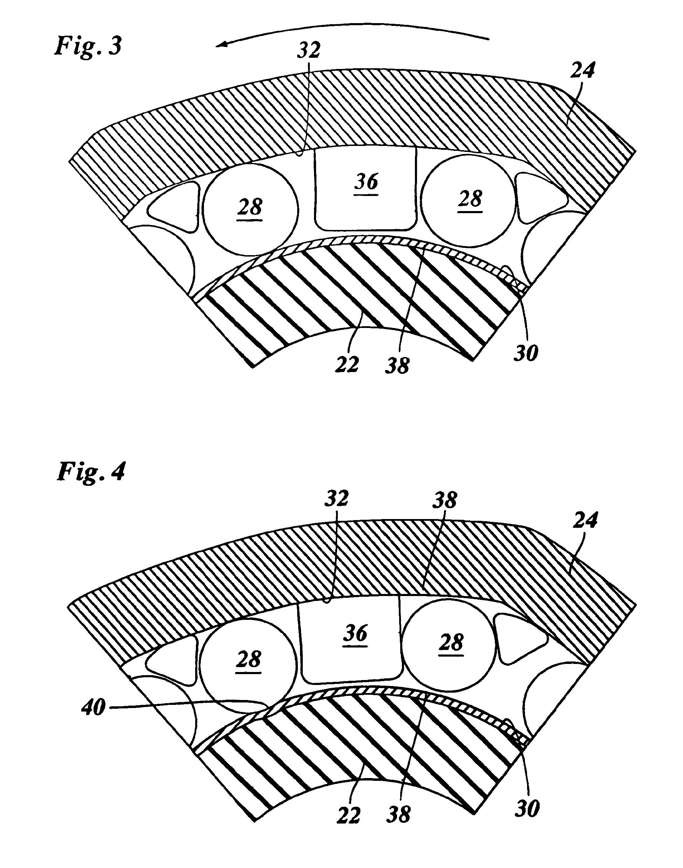

Die Detaildarstellung in Fig. 3 illustriert eine Situation, in der bei unbetätigtem Löseelement auf den Außenring 24 ein Drehmoment in Gegenuhrzeigerrichtung wirkt, mit der Folge, daß der Außenring geringfügig in dieser Richtung verdreht wird. Für den auf der rechten Seite der Klaue 36 gelegenen Klemmkörper 28 hat sich dadurch die Breite des Spaltes vergrößert, so daß dieser Klemmkörper nicht zur Klemmung führt. Für den Klemmkörper 28 auf der linken Seite hat sich dagegen die Breite des Spaltes verringert, so daß dieser Klemmkörper nun zwischen dem Innenring 22 und dem Außenring 4 verkeilt ist und das Sperren der Kupplung bewirkt.

Die erste Laufbahn 30 wird in diesem Beispiel durch eine gehärtete Oberflächenschicht 38 des Innenrings 22 gebildet. Die Härte und Tiefe dieser Oberflächenschicht 38 ist so gewählt, daß der von dem Klemmkörper 28 ausgeübte Druck bei normaler Drehmomentbelastung, wie sie im normalen Betrieb des Kraftfahrzeugs auftritt, nicht zu einer lokalen Verformung dieser Laufbahn 30 führt. Der Außenring 24, der die zweite Laufbahn 32 bildet, ist durchgehärtet oder ebenfalls oberflächengehärtet, jedoch so, daß seine Härtungsschicht widerstandsfähiger ist als die Oberflächenschicht 38 der ersten Laufbahn 30.

Wenn, beispielsweise bei einem Crash des Fahrzeugs, ein größeres Drehmoment auf den Außenring 24 wirkt, so kann es im Prinzip trotz der Klemmwirkung der Klemmkörper 28 zu einem Versagen der Kupplung kommen, beispielsweise aufgrund einer elastischen Verformung des Außenrings 24 und/oder des Innenringes als Ganzes, so daß die Rückenlehne 14 nicht mehr in der eingestellten Position gehalten wird, sondern beispielsweise nach vorn schwenkt und den Benutzer des Kraftfahrzeugsitzes verletzt.

Erfindungsgemäß ist nun die Oberflächenschicht 38 der ersten Laufbahn 30 weicher als die Oberfläche der zweiten Laufbahn 32, so daß sie ab einem bestimmten Grenzdrehmoment lokal nachgeben kann, wie in Fig, 4 gezeigt ist. In Fig. 4 hat die Oberflächenschicht 38 an der Stelle, an der sie von dem linken Klemmkörper 28 berührt wird, unter plastischer Verformung nachgegeben und eine Grube 40 gebildet, in die sich der Klemmkörper gleichsam "eingegraben" hat. Dadurch hat sich der Außenring 24 geringfügig weiter im Uhrzeigersinn drehen können, bevor die Klemmkontur der zweiten Laufbahn 32 das Blockieren bewirkt hat.

Die Grube 40 schafft nun eine formschlüssige Verbindung zwischen dem Klemmkörper 28 und der ersten Laufbahn 30 und verhindert so ein Durchrutschen des Klemmkörpers an dieser ersten Laufbahn, und zwar auch noch bei einem sehr hohen Drehmoment, das bei einem Innenring mit tieferer und härterer Oberflächenschicht 38 oder bei einem durchgehärteten Innenring bereits zu einer elastischen Aufweitung des Außenrings insgesamt und damit zu einem Durchrutschen der Klemmkörper geführt hätte.

In einem praktischen Beispiel besteht bei einem Verstellbeschlag mit dem hier gezeigten Aufbau der Innenring 22 aus einem niedriglegierten Stahl, beispielsweise 15CR3, und die Oberflächenschicht 38 hat eine Tiefe von etwa 0,3 bis 0,5 mm und eine Vickers-Härte von 700. Die plastische Verformung der Oberflächenschicht tritt dann bei einem Grenzdrehmoment in der Größenordnung von etwa 100 bis 140 Nm ein, während es zu einem Versagen der Kupplung erst bei einem weit höheren Drehmoment von 200 Nm oder mehr kommt.

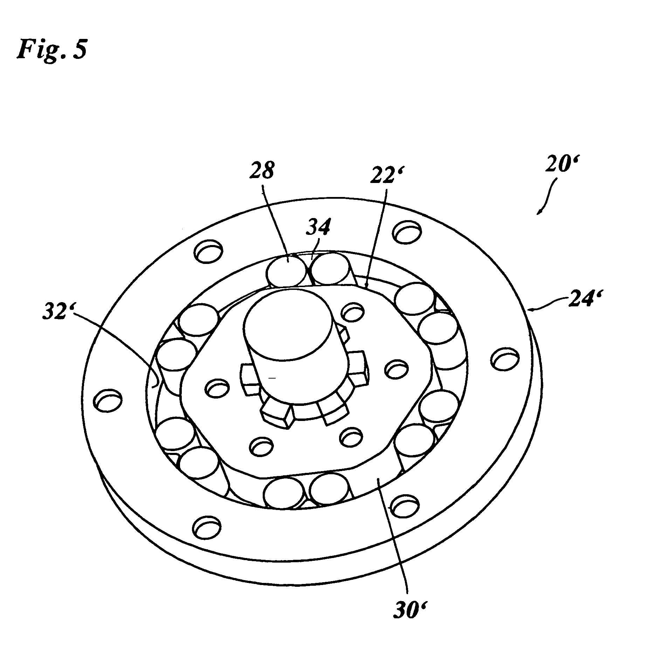

Fig. 5 zeigt eine Kupplung 20'_gemäß einem abgewandelten Ausführungsbeispiel. Diese Kupplung hat einen Außenring 24' mit einer zylindrischen ersten Laufbahn 32' und einen Innenring 22' mit einer nicht-zylindrischen zweiten Laufbahn 30', die hier die Klemmkontur bildet. In diesem Fall wäre die erste Laufbahn 32' des Außenrings 24' oberflächengehärtet und zwar so, daß diese Laufbahn weicher ist als die erste Laufbahn 30' des Innenrings 22'. Bei einem Crash würden sich dann die Klemmkörper (28) in die weichere erste Laufbahn 32' des Außenrings eingraben und so das Drehmoment erhöhen, bei dem es zu einem Durchrutschen der Kupplung kommt.

## Patentansprüche

1. Verstellbeschlag für Kraftfahrzeugsitze (10), mit einer Kupplung (20; 20'), die mindestens einen längs einer Trajektorie bewegbaren Klemmkörper (28), eine parallel zu der Trajektorie verlaufende erste Laufbahn (30; 32') aus Metall mit einer gehärteten Oberflächenschicht (38), und eine von der Trajektorie abweichende, eine Klemmkontur bildende zweite Laufbahn (32; 30') aufweist, **dadurch gekennzeichnet, daß** die Oberflächenschicht (38) der ersten Laufbahn (30; 32') nach Härte und Tiefe so dimensioniert ist, daß die erste Laufbahn weicher ist als die zweite.

2. Verstellbeschlag nach Anspruch 1, bei dem die Kupplung (20) einen Innenring (22), der eine zylindrische Laufbahn als erste Laufbahn (30) bildet, und einen Außenring (24) aufweist, der die zweite Laufbahn (32) bildet, die die erste Laufbahn (30) mit Abstand konzentrisch umgibt.

3. Verstellbeschlag nach Anspruch 1, bei dem die Kupplung (20') einen Außenring (24'), der eine zylindrische Laufbahn als erste Laufbahn (32') bildet, und einen Innenring (22') aufweist, der die erste Laufbahn (30') bildet und von der ersten Laufbahn (32') mit Abstand konzentrisch umgeben ist.

4. Verstellbeschlag nach einem der vorstehenden Ansprüche, bei dem die Oberflächenschicht (38) so dimensioniert ist, daß sie dem Druck des Klemmkörpers (28) unter lokaler plastischer Verformung nachgibt, wenn das auf die Kupplung (20; 20') wirkende Drehmoment ein Grenzdrehmoment übersteigt, das zwischen 60 und 150 Nm liegt.

5. Verstellbeschlag nach Anspruch 4, bei dem das Grenzdrehmoment kleiner als 120 Nm ist.

6. Verstelibeschlag nach einem der vorstehenden Ansprüche, bei dem die Oberflächenschicht (38) eine Tiefe von 0,3 bis 0,5 mm und eine Vickers-Härte von 600 bis 750 hat.

## Claims

1. Adjustment fitting for motor vehicle seats (10), comprising a coupling (20; 20') which has at least one wedge body (28) movable along a trajectory, a first track (30; 32') that extends in parallel with the trajectory and is made of metal having a hardened surface layer (38), and a second track (32; 30') which deviates from the trajectory and forms a wedge contour, **characterised in that** the surface layer (38) of the first track (30; 32') is so dimensioned in hardness and depth that the first track is softer than the second one.

2. Adjustment fitting according to claim 1, wherein the coupling (20) has an inner ring (22) forming a cylindrical track as the first track (30), and an outer ring (24) forming the second track (32) which concentrically surrounds the first track (30) with a spacing formed therebetween.

3. Adjustment fitting according to claim 1, wherein the coupling (20') has an outer ring (24) forming a cylindrical track as the first track (32'), and an inner ring (22') which forms the second track and is concentrically surrounded by the first track (32') with a spacing formed therebetween.

4. Adjustment fitting according to any of the preceding claims, wherein the surface layer (28) is so dimensioned that it yields to the pressure of the wedge body (28) with local plastic deformation when the torque acting upon the coupling (20; 20') exceeds a torque threshold that is between 60 and 150 Nm.

5. Adjustment fitting according to claim 4, wherein the torque threshold is smaller than 120 Nm.

6. Adjustment fitting according to any of the preceding claims, wherein the surface layer (38) has a depth of 0.3 to 0.5 mm and a Vickers-hardness of 600 to 750.

## Revendications

1. Armature réglable pour des sièges de véhicule (10), munie d'un élément de couplage (20 ; 20') comportant au moins un corps de serrage (28) mobile le long d'une trajectoire, un premier chemin de roulement (30 ; 32') s'étendant parallèlement à la trajectoire et constitué d'un métal avec une couche de surface trempée (38), et un second chemin de roulement (32 ; 30') formant un contour de serrage s'écartant de la trajectoire, **caractérisée en ce que** la couche de surface (38) du premier chemin de roulement (30 ; 32') est dimensionnée en termes de dureté et de profondeur de telle sorte que le premier chemin de roulement est plus souple que le second.

2. Armature réglable selon la revendication 1, dans laquelle l'élément de couplage (20) comporte une bague intérieure (22) formant un chemin de roulement cylindrique en tant que premier chemin de roulement (30), et une bague extérieure (24) formant le second chemin de roulement (32) qui entoure à distance le premier chemin de roulement (30) de manière concentrique.

3. Armature réglable selon la revendication 1, dans laquelle l'élément de couplage (20') comporte une bague extérieure (24') formant un chemin de roulement cylindrique en tant que premier chemin de roulement (32'), et une bague intérieure (22') formant le premier chemin de roulement (30') et est entourée à distance de manière concentrique par le premier chemin de roulement (32').

4. Armature réglable selon l'une quelconque des revendications précédentes, dans laquelle la couche de surface (38) est dimensionnée de telle sorte qu'elle cède à la pression du corps de serrage (28) sous une déformation plastique locale lorsque le couple agissant sur l'élément de couplage (20 ; 20') dépasse un couple limite compris entre 60 et 150 Nm.

5. Armature réglable selon la revendication 4, dans laquelle le couple limite est inférieur à 120 Nm.

6. Armature réglable selon l'une quelconque des revendications précédentes, dans laquelle la couche de surface (38) a une profondeur de 0,3 à 0,5 mm et une dureté Vickers de 600 à 750.
